# EUROPÄISCHE PATENTSCHRIFT

(11) **EP 3 552 269 B1**
(45) Veröffentlichungstag und Bekanntmachung des Hinweises auf die Patenterteilung: **07.10.2026**
(21) Anmeldenummer: 18706479.5
(22) Anmeldetag: 16.02.2018
(51) Int. Cl.: H01Q 1/24

(54) **ANTENNE, INSBESONDERE MOBILFUNKANTENNE**
ANTENNA, IN PARTICULAR ANTENNA FOR WIRELESS COMMUNICATIONS
ANTENNE, EN PARTICULIER ANTENNE DE TÉLÉPHONIE MOBILE

(30) Priorität: 16.02.2017 DE 102017001543
(43) Veröffentlichungstag der Anmeldung: 16.10.2019
(73) Patentinhaber: Telefonaktiebolaget LM Ericsson (PUBL), 164 83 Stockholm (SE)
(72) Erfinder: KÜSEL, Volker, 83024 Rosenheim (DE); MÜHLBAUER, Helmut, 13591 Berlin (DE); REICHELT, Stefan, 83339 Chieming / Egerer (DE); STUIBLE, Eckart, 83098 Brannenburg (DE)
(74) Vertreter: Ericsson
(86) Internationale Anmeldenummer: PCT/EP2018/053906
(87) Internationale Veröffentlichungsnummer: WO 2018/149976

(56) Entgegenhaltungen:
- WO-A1-2015/185802
- US-A1- 2002 193 144
- US-A1- 2003 162 539
- US-A1- 2006 145 884
- US-A1- 2007 229 378
- US-A1- 2007 229 378
- US-A1- 2010 278 086
- US-A1- 2010 278 086
- US-A1- 2013 328 716
- US-A1- 2016 352 009
- US-B2- 9 177 184

## Beschreibung

Die vorliegende Erfindung betrifft eine Antenne mit mindestens einem Strahler, einer Datenerfassungseinheit, einem Speicher und mit mindestens einem Sensor zur Erfassung einer mechanischen und/oder elektrischen und/oder thermischen Belastung der Antenne, wobei die Datenerfassungseinheit durch den Sensor ermittelte Messdaten in dem Speicher speichert.

Eine solche Antennen ist aus der US 9,177,184 B2 bekannt. Die Antenne weist einen RFID-Chip mit einem Speicher auf, in welchen die Datenerfassungseinheit Betriebsdaten der Antenne abspeichert. Der Down-Tilt Winkel der einzelnen durch die Antenne unterstützten Frequenzbänder ist durch eine austauschbare Motoreinheit mechanisch einstellbar, welche einen RFID-Leser zum Auslesen der Daten von dem RFID-Chip aufweist. Die Betriebsdaten umfassen daher insbesondere Konfigurationsdaten zu den Down-Tilt-Winkeln der Antenne, welche von der Motoreinheit benötigt werden. Weiterhin kann der RFID-Chip als Logbuch genutzt werden, indem Daten zu Temperaturänderungen, extremen Temperaturen, Anpassungszyklen und Beschleunigungen gespeichert werden.

Weiterhin ist aus der DE 198 82 702 B3 ein antennennahes Gerät bekannt, welches eine Test- und Überwachungsfunktion aufweist, welche periodisch ausgeführt wird, und deren Ergebnisse in einer Datenbank des antennennahen Gerätes gespeichert und an ein Funksender- oder Empfängergerät weiter kommuniziert.

Weitere Antennen sind aus den Druckschriften US 7830307 B2, US 8423201 B2, US 8354959 B2, US 8676266 B2, US 9306278 B2, US 2013127666 A1, US 9046601 B2, WO 2014042444 A1, US 9276329 B2, US 2014242930 A1, WO 2014143678 A9, US 9177184 B2, EP 2804260 A1, US 9332441 B2, US 8896497 B1, US 9246559 B2, US 2015034785 A1, EP 2838158 A1, WO 2015082000 A1, EP 2894896 A1, WO 2015131835 A1 und EP 2940791 A1 bekannt.

Druckschrift WO 2015/185802 A2 zeigt ein Verfahren zur Überwachung der Alterung von Autobatterien.

Druckschrift US 2010/0278086 A1 zeigt ein Verfahren zur Datenübertragung.

Druckschrift US 2003/0162539 A1 offenbart ein Überwachungssystem für eine Basisstation für drahtlose Netzwerke mit einem Testmodul. Das Testmodul ist über ein Kommunikationsnetzwerk mit einem Remote-Basisstations-Management-System (RBMS) verbunden.

Druckschrift US 2006/0145884 A1 zeigt ein Antennenüberwachungssystem mi einer Antennenüberwachungseinheit zur Überwachung des HF-Pegels. Die erfassten Daten werden von der Antennenüberwachungseinheit an ein zentrales Überwachungssystem unreduziert gesendet.

Druckschrift US2016/352009 A1 offenbart eine Antenne für Satellitenkommunikation mit einem Beschleunigungsmesser, um Bewegungen des Mastes, z. B. durch Wind, oder Neigungsänderungen zu ermitteln.

Aufgabe der vorliegenden Erfindung ist es, ein verbessertes System und Verfahren zur Überwachung einer Antenne zur Verfügung zu stellen.

Diese Aufgabe wird von dem Gegenstand der unabhängigen Ansprüche gelöst. Bevorzugte Ausgestaltungen der vorliegenden Erfindung sind Gegenstand der Unteransprüche.

Die vorliegende Erfindung umfasst ein System gemäß Anspruch 1. Das System umfasst eine Antenne mit mindestens einem Strahler, einer Datenerfassungseinheit, einem Speicher und mit mindestens einem Sensor zur Erfassung einer mechanischen und/oder thermischen Belastung der Antenne, wobei die Datenerfassungseinheit Messdaten des mindestens einen Sensors erfasst und in dem Speicher zwischenspeichert. Weiter umfasst die Antenne mehrere Sensoren zur Erfassung der mechanischen und/oder thermischen Belastung und optional der elektrischen Belastung der Antenne, wobei die Datenerfassungseinheit Messdaten der Sensoren erfasst und in dem Speicher zwischenspeichert. Erfindungsgemäß ist vorgesehen, dass die Datenerfassungseinheit auf Grundlage einer Mehrzahl von in dem Speicher gespeicherten Messdaten Datenpakete erzeugt und an eine externe Datenbank übermittelt. Die Übertragung der Datenpakete an die externe Datenbank erlaubt eine Auswertung der Messdaten, durch welche Rückschlüsse auf eine Veränderung der mechanischen Eigenschaften und optional der elektrischen Eigenschaften der Antenne und/oder deren Lebensdauer gezogen werden können. Durch das Zwischenspeichern der Messdaten und das Erzeugen der Datenpakete auf Grundlage einer Mehrzahl von Messdaten muss keine ständige Kommunikation mit der externen Datenbank stattfinden.

Insbesondere kann es sich bei der Antenne um eine Mobilfunkantenne handeln, insbesondere um eine Antenne für eine Mobilfunkbasisstation. Die vorliegende Erfindung kann jedoch mit jeder Art von Antenne eingesetzt werden.

In einer möglichen Ausführungsform der vorliegenden Erfindung umfasst die Antenne eine Mehrzahl von Strahlern. Bevorzugt sind die Strahler in mehren Spalten und/oder Reihen angeordnet und/oder bilden eine oder mehrere Strahlerarrays.

Bevorzugt ist zumindest ein Tilt-Winkel eines oder mehrerer Strahlerarrays verstellbar, bevorzugt elektrisch verstellbar, insbesondere über die Verstellung eines oder mehrerer Phasenschieber. Bevorzugt sind der oder die Phasenschieber elektromotorisch verstellbar.

Bevorzugt weist die Antenne einen oder mehrere Ports zum Versorgen der Antenne mit HF-Signalen auf. Bevorzugt erfolgt über die Ports gleichzeitig eine Energieversorgung von Komponenten der Antenne, insbesondere eine Energieversorgung eines elektrischen Antriebs zur Verstellung eines Tilt-Winkels und/oder der Datenerfassungseinheit.

In einer möglichen Ausführungsform der vorliegenden Erfindung kann über einen oder mehrere Ports eine Kommunikation mit einer oder mehreren Basisstationen erfolgen.

Bevorzugt ist die externe Datenbank und/oder die Kommunikation der Datenerfassungseinheit mit der externen Datenbank unabhängig von der oder den Basisstationen, welche die Antenne mit HF-Signalen versorgen.

Bevorzugt ist die externe Datenbank einer Vielzahl von Antennen zugeordnet, welche an unterschiedlichen Standorten angeordnet sind und/oder unterschiedlichen Basisstationen zugeordnet sind.

Bevorzugt löscht die Datenerfassungseinheit die Messdaten nach der Übermittlung der Datenpakete an die externe Datenbank zumindest teilweise aus dem Speicher. Durch das zumindest teilweise Löschen der Daten werden die Anforderungen an den Speicherplatz reduziert. Bevorzugt werden die Messdaten komplett gelöscht.

In einer bevorzugten Ausführungsform nimmt Datenerfassungseinheit die Übermittlung der Datenpakete in vorbestimmten Abständen und/oder auf Anforderung durch eine externe Stelle hin, insbesondere durch die Datenbank, vor.

In einer ersten möglichen Ausführungsform und/oder einem ersten Betriebsmodus initiiert die Datenerfassungseinheit die Übermittlung der Datenpakete selbsttätig.

In einer zweiten möglichen Ausführungsform wird eine Übertragung der Datenpakete dadurch initiiert, dass die Datenerfassungseinheit eine entsprechende Anforderung erhält. Die externe Stelle kann dabei z.B. so ausgestaltet sein, dass sie alle an das System angeschlossenen Antennen nacheinander abfragt.

In einer möglichen Ausführungsform der vorliegenden Erfindung erfasst die Datenerfassungseinheit die Messdaten mit einer vorbestimmten Frequenz. Die vorbestimmte Frequenz kann dabei beim Vorhandensein mehrerer Sensoren für mindestens zwei Sensoren unterschiedlich sein. Die Frequenz, mit welcher die die Datenerfassungseinheit die Messdaten eines Sensors erfasst, kann konstant sein oder variieren, und in einer möglichen Ausgestaltung von den erfassten Werten und/oder der Variation der erfassten Werte abhängen. Bevorzugt erfasst die Datenerfassungseinheit die Messdaten mindestens eines und bevorzugt mehrerer oder aller Sensoren mit einer Frequenz größer 0,001 Hz, weiter bevorzugt mit einer Frequenz größer 0,01 Hz.

In einer möglichen Ausführungsform der vorliegenden Erfindung erfolgt die Übermittlung an die externe Datenbank mit einem vorbestimmten Abstand von mehr als 1 Minute. Weiter bevorzugt erfolgt die Übermittlung mit einem minimalen Abstand von mehr als 10 Minuten, weiter bevorzugt von mehr als 30 Minuten. Der Abstand kann durch die Datenerfassungseinheit und/oder die externe Stelle vorgegeben werden.

Der Abstand, mit welchem die Übersendung erfolgt, kann konstant sein oder variieren, und in einer möglichen Ausgestaltung von den erfassten Werten und/oder der Variation der erfassten Werte und/oder der Anzahl der gespeicherten Werte und/oder dem noch verfügbaren Speicherplatz abhängen.

Bevorzugt ist der Abstand, in welchem eine Übermittlung von Datenpaketen erfolgt, größer als der Abstand, mit welchem Messwerte erfasst werden.

In einer möglichen Ausführungsform der vorliegenden Erfindung erzeugt die Datenerfassungseinheit die Datenpakete auf Grundlage einer Mehrzahl von zeitlich aufeinanderfolgenden Messdaten. Bevorzugt erfolgt die Erzeugung der Datenpakete zumindest auf Grundlage einer Mehrzahl von zeitlich aufeinanderfolgenden Messdaten des gleichen Sensors. Bevorzugt erzeugt die Datenerfassungseinheit die Datenpakete auf Grundlage von mehr als 10 aufeinanderfolgenden Messdaten, bevorzugt auf Grundlage von mehr als 100 aufeinanderfolgenden Messdaten.

Erfindungsgemäß führt die Datenerfassungseinheit eine Datenreduktion der erfassten Messdaten durch. Hierdurch wird die Datenmenge, welche gespeichert und/oder übermittelt werden muss, reduziert.

Bevorzugt umfasst die Datenreduktion eine Auswertung der Messdaten im Hinblick auf Maximalwerte, Minimalwerte und/oder Zyklen. Alternativ oder zusätzlich kann ein Spektrum erzeugt werden, bevorzugt ein Spektrum von Maximalwerten, Minimalwerten und/oder Zyklen. Weiter bevorzugt führt die Datenerfassungseinheit eine Aufteilung des Spektrums in Bänder durch. Bevorzugt sind die Bänder in der Datenerfassungseinheit definiert und/oder abgespeichert. Die Datenerfassungseinheit ermittelt dabei, wie viele der Messwerte in einem Band liegen. Es können auch Messwerte abgelegt werden die aus einzelnen Messpunkten zusammengesetzt werden.

In einer möglichen Ausführungsform der vorliegenden Erfindung speichert die Datenerfassungseinheit die Messdaten sequentiell in dem Speicher ab. Insbesondere kann die Datenerfassungseinheit die Messdaten mit der vorbestimmten Frequenz erfassen und abspeichern. Die Messdaten können dabei als unverarbeitete Messwerte abgespeichert werden. Weiterhin kann vorgesehen sein, dass alle erfassten Messdaten abgespeichert und/oder die Messdaten mit der gleichen Frequenz abgespeichert werden, mit welcher sie erfasst werden.

In einer möglichen Ausführungsform der vorliegenden Erfindung führt die Datenerfassungseinheit zur Erzeugung der Datenpakete, welche an die externe Datenbank übertragen werden, eine Datenreduktion der in dem Speicher abgespeicherten Messdaten durch. Erfindungsgemäß erfolgt daher zur Erzeugung der Datenpakete jeweils eine Verarbeitung der gespeicherten Daten, durch welche die Datenmenge reduziert wird. Insbesondere erfolgt die Datenreduktion bei dieser Ausgestaltung bevorzugt erst bei der Erzeugung der Datenpakete aus den gespeicherten Daten.

In einer alternativen Ausführungsform der vorliegenden Erfindung speichert die Datenerfassungseinheit die mit einer vorbestimmten Frequenz erfassten Messdaten erst nach der Durchführung einer Datenreduktion ab. Insbesondere kann in einer möglichen Ausführungsform vor dem Abspeichern der Messdaten jeweils eine Verarbeitung der erfassten Messdaten erfolgen, durch welche die Datenmenge reduziert wird. Hierdurch ist es in bestimmten Ausführungsformen nicht mehr notwendig, alle erfassten Messdaten abzuspeichern und/oder die Messdaten mit der gleichen Frequenz abzuspeichern, mit welcher sie erfasst werden. Bspw. kann vorgesehen sein, dass das Abspeichern erst dann erfolgt, wenn ein erfasster Messwert einen Maximalwert, Minimalwert und/oder Zyklusende darstellt. Bei dieser Ausgestaltung handelt es sich bei den Messwerten, welche abgespeichert werden, daher üblicherweise um verarbeitete Messwerte.

In einer möglichen Ausführungsform der vorliegenden Erfindung umfasst die Antenne mehrere unterschiedliche Sensoren zur Erfassung einer mechanischen und/oder elektrischen und/oder thermischen Belastung der Antenne, deren Messdaten in dem Speicher zwischengespeichert werden. Bevorzugt umfassen dabei die von der Datenerfassungseinheit übermittelten Datenpakete Messdaten von mehreren Sensoren, welche gemeinsam an die externe Datenbank übermittelt werden. Bevorzugt erfolgt die Übermittlung der Daten in Form einer Matrix.

Die Antenne gemäß der vorliegenden Erfindung umfasst bevorzugt mindestens einen und bevorzugt mehrere der folgenden Sensoren, deren Messdaten von der Datenerfassungseinheit erfasst werden:
- Einen oder mehrere Sensoren zur Messung mechanischer Belastungen der Antennenstruktur. Beispielsweise kann ein solcher Sensor einen oder mehrere Dehnmessstreifen umfassen. Alternativ oder zusätzlich kann ein optisches System vorgesehen sein. Weiterhin kann eine aus Dehnmessstreifen aufgebaute Kraftmessdose eingesetzt werden. Bevorzugt ist mindestens ein Sensor zur Messung mechanischer Belastungen an einem Befestigungselement der Antenne vorgesehen und/oder diesem zugeordnet, insbesondere einem Befestigungselement zur Befestigung der Antenne an einem Mast.
- Einen oder mehrere Beschleunigungssensoren. Diese können auf einer Messplatine angeordnet sein. Insbesondere können mehrere Beschleunigungssensoren vorgesehen sein, welche bevorzugt alle 6 Freiheitsgrade erfassen. In einer möglichen Ausgestaltung werden aus den Beschleunigungen Kräfte abgeleitet.
- Einen oder mehrere Temperatursensoren. Insbesondere kann dabei mindestens ein Temperatursensor zur Messung der Temperatur eines Bauteils der Antenne, welches sich durch den Betrieb der Antenne erwärmt, vorgesehen sein. Bevorzugt misst der Temperatursensor die Temperatur an einem elektronischen Bauteil und/oder einer Lötstelle und/oder einem Port der Antenne. Alternativ oder zusätzlich kann mindestens ein Temperatursensor zur Messung der Temperatur der Umgebung und/oder der Antennenstruktur vorgesehen sein. Bevorzugt sind mehrere Sensoren vorgesehen. Der oder die Sensoren sollten an einer oder mehreren charakteristischen Stellen appliziert sein, welche Auskunft über die thermische Belastung der Antenne geben.
- Bestimmung der Antennenleistung entweder durch Messung mittels Sensor oder durch passive Aufzeichnung der angeforderten Leistung. Bevorzugt wird die Antennenleistung für jeden Port der Antenne einzeln gemessen und/oder abgespeichert. Die Erfassung der Antennenleistung kann bspw. durch mindestens einen Richtkoppler und/oder durch mindestens einen Temperatursensor erfolgen. Die Leistung kann auch die vorhandene Elektronik der Antenne liefern.

Die Antenne kann in einer möglichen Ausführungsform weiterhin einen oder mehrere Sensoren zur Erfassung der geografischen Position und/oder zur Erfassung der Orientierung der Antenne aufweisen.

In einer möglichen Ausführungsform der vorliegenden Erfindung umfassen die Datenpakete neben aus den Messdaten erzeugten Daten weitere Antennendaten. Insbesondere umfassen die weiteren Antennendaten mindestens einen Identifikator wie bspw. die Seriennummer. Alternativ oder zusätzlich können die Datenpakete geografische Standortdaten und/oder Antennenkonfigurationsdaten umfassen. Der Identifikator wird bevorzugt zur richtigen Zuordnung der Daten in der Datenbank genutzt.

In einer möglichen Ausführungsform der vorliegenden Erfindung erfasst die Datenerfassungseinheit die Messdaten während der Lagerung, des Transports und/oder während des Betriebs der Antenne,

Bevorzugt erfasst die Datenerfassungseinheit die Messdaten zumindest während der Lagerung und/oder des Transports. Auch die Lagerung und der Transport haben einen Einfluss auf den Zustand der Antenne und deren Lebensdauer, und können hierdurch erfindungsgemäß berücksichtigt werden. Weiter bevorzugt erfolgt auch während des Betriebs der Antenne eine Erfassung der Messdaten.

In einer möglichen Ausführungsform der vorliegenden Erfindung werden die Messdaten während der Lagerung und/oder des Transports zwischengespeichert und erst bei oder nach der Inbetriebnahme auf Grundlage dieser Messdaten erzeugte Datenpakete an die externe Datenbank übertragen. Während der Lagerung und/oder des Transports muss daher keine Datenübertragung erfolgen.

In einer möglichen Ausführungsform der vorliegenden Erfindung weist die Antenne eine autonome Energieversorgung auf, insbesondere einen Speicher für elektrische Energie, insbesondere eine Batterie, einen Kondensator oder einen Akkumulator. Bevorzugt erlaubt die autonome Energieversorgung einen Betrieb der Datenerfassungseinheit während der Lagerung und/oder des Transports, d.h. während Phasen, in welchen die Antenne nicht über eine externe Energieversorgung mit Energie versorgt wird.

In einer möglichen Ausführungsform bildet die autonome Energieversorgung ein separates Element, welches an einen Anschluss der Antenne anschließbar ist, um die Antenne mit Energie zu versorgen. Bevorzugt ist die autonome Energieversorgung an einen Port der Antenne anschließbar. Hierdurch müssen für die Energieversorgung während der Lagerung und des Transports keine zusätzlichen Anschlüsse an der Antenne bereitgestellt werden.

In einer weiterem Ausführungsform ist die autonome Energieversorgung in der Antenne verbaut. Insbesondere ist in der Elektronik der Antenne ein elektrischer Energiespeicher, insbesondere ein Kondensator vorgesehen, welcher die Datenerfassungseinheit und/oder Sensorik mit Energie versorgt. Dieser wird vor dem Verpacken geladen. Dies hat den Vorteil, dass keine Batterie und die damit verbundenen Transportprobleme, Kosten, Müll, und Fehler beim Kunden vermieden werden.

In einer bevorzugten Ausgestaltung der vorliegenden Erfindung erkennt die Datenerfassungseinheit, dass keine externe Energieversorgung vorliegt, und überträgt in diesem Zustand keine Daten und/oder ändert die Parameter der Datenerfassung. Bspw. kann die Datenerfassungseinheit die Erfassung und/oder Speicherung von Messdaten zu einer elektrischen Belastung unterlassen und/oder die Frequenz, mit welcher Messdaten erfasst werden, für einen oder mehrere Sensoren reduzieren.

In einer möglichen Ausführungsform der vorliegenden Erfindung weist die Antenne eine Kommunikationsschnittstelle auf, über welche die Daten an die externe Datenbank übertragen werden. Die Kommunikationsschnittstelle kann drahtlos und/oder drahtgebunden ausgestaltet sein. In einer möglichen Ausgestaltung kann die Kommunikation zwischen der Antenne und der Datenbank über das Internet erfolgen.

Das erfindungsgemäße System umfasst eine Mehrzahl von Antennen, wie sie oben beschrieben wurden, eine zentrale externe Datenbank und eine Auswerteeinheit. Weiter ermittelt die Auswerteeinheit auf Grundlage der von den Antennen übermittelten Daten eine Veränderung der mechanischen Eigenschaften und/oder einen Schädigungswert und/oder einen Rest-Lebensdauerwert und optional eine Veränderung der elektrischen Eigenschaften der Antennen.

Alternativ oder zusätzlich ermittelt die Auswerteeinheit auf Grundlage der von den Antennen übermittelten Daten Änderungen in der Position und Ausrichtung der Antennen.

Alternativ oder zusätzlich ermittelt die Auswerteeinheit auf Grundlage der von den Antennen übermittelten Daten antennenstandortbezogene Daten für die mechanischen und/oder thermischen Belastungen der Antennen. Damit entsteht einen Datenbasis für Standorte weltweit. Beispielsweise können antennenstandortbezogene Daten zu Vibrationen, Leistungen und/oder Umgebungstemperaturen ermittelt werden.

Erfindungsgemäß vergleicht die Auswerteeinheit für jede Antenne mindestens einen aus den von der Antenne übermittelten Datenpaketen generierten Wert mit einer zu dem entsprechenden Antennentyp in der Auswerteeinheit gespeicherten Kennlinie. Insbesondere kann es sich bei der Kennlinie um eine Ermüdungskennlinie handeln. Bevorzugt sind in der Auswerteeinheit eine Mehrzahl von Kennlinien gespeichert. Bevorzugt sind zu jedem überwachten Antennentyp mindestens eine Kennlinie und bevorzugt mehrere Kennlinien hinterlegt.

In einer möglichen Ausführungsform der vorliegenden Erfindung werden die von den Antennen in vorbestimmten Abständen übermittelten Datenpakete in der Datenbank für die jeweiligen Antennen gesammelt. Die Datenbank umfasst hierfür bevorzugt für jede überwachte Antenne einen Speicherabschnitt, in welchem die Datenpakete und/oder auf Grundlage der Datenpakete erzeugte Daten gesammelt werden. Bevorzugt weist die Datenbank eine entsprechende Datenbank-Steuerung auf.

In einer möglichen Ausführungsform der vorliegenden Erfindung umfassen die von einer Antenne übermittelten Daten ein Spektrum, welches bevorzugt in Bänder aufgeteilt ist, wobei die Auswerteeinheit bevorzugt die zu unterschiedlichen Zeitpunkten von der Antenne übermittelten Spektren addiert, um ein Gesamtspektrum zu erzeugen. Weiterhin kann die Auswertung auf Grundlage der Gesamtheit der von der Antenne übermittelten Datenpakete erfolgen.

Erfindungsgemäß werden aus den Messdaten eines oder mehrerer Sensoren erzeugte und durch die Antenne übermittelte Daten durch die Auswerteeinheit in Parameter umgerechnet, für welche in der Auswerteeinheit eine oder mehrere Kennlinien abgespeichert sind. Bevorzugt erfolgt die Umrechnung durch eine Übertragungsfunktion.

Bspw. können Daten zu einer gemessenen Beschleunigung und/oder zu gemessenen Kräften in eine Windlast umgerechnet werden. Hieraus kann ein Windlastprofil des Standortes errechnet werden.

Weiterhin können zur Bestimmung einer Schädigung der Antenne die Kräfte auf Basis der Beschleunigungen und der Masseeigenschaften errechnet werden. Alternativ ist eine unmittelbare Messung der Kräfte möglich.

Die vorliegende Erfindung umfasst weiterhin ein Verfahren gemäß Anspruch 12. Das Verfahren dient zur Überwachung mindestens einer Antenne, wobei die Antenne mindestens einen Strahler, eine Datenerfassungseinheit, einen Speicher und mindestens einen Sensor aufweist, wobei die Datenerfassungseinheit durch den Sensor ermittelte Messdaten erfasst und in dem Speicher abspeichert. Erfindungsgemäß ist vorgesehen, dass die Datenerfassungseinheit in vorbestimmten Abständen auf Grundlage einer Mehrzahl von in dem Speicher gespeicherten Messdaten eines oder mehrere Datenpakete erzeugt und an die zentrale Datenbank übermittelt, wobei die übermittelten Datenpakete in der Datenbank für die Antenne gesammelt und zur Überwachung der Antenne durch eine Auswerteeinheit ausgewertet werden.

Bevorzugt wird eine Mehrzahl von Antennen überwacht. Weiterhin kann es sich bei der oder den Antennen um eine Mobilfunkantenne, insbesondere eine Mobilfunkantenne einer Mobilfunkbasisstation, handeln.

Weiter ermittelt die Auswerteeinheit eine Veränderung der mechanischen Eigenschaften und/oder einen Schädigungswert und/oder einen Rest-Lebensdauerwert und optional eine Veränderung der elektrischen Eigenschaften der Antenne.

Erfindungsgemäß vergleicht die Auswerteeinheit mindestens einen aus den von der Antenne übermittelten Datenpaketen generierten Wert mit einer zu dem entsprechenden Antennentyp in der Auswerteeinheit gespeicherten Kennlinie, wobei es sich bevorzugt um eine Ermüdungskennlinie und/oder eine Korrelationskurve handelt. Insbesondere kann es sich um eine Korrelationskurve zwischen Beschleunigung und Kräften an der Antenne handelt, durch welche aus den Beschleunigungen Kräfte ermittelt werden.

Erfindungsgemäß führt die Datenerfassungseinheit eine Datenreduktion der erfassten Messdaten durch, wobei die Datenreduktion bevorzugt eine Auswertung der Messdaten im Hinblick auf Maximalwerte, Minimalwerte und/oder Zyklen und/oder eine Erzeugung eines Spektrums, insbesondere eines Spektrums von Maximalwerten, Minimalwerten und/oder Zyklen, umfasst, wobei weiter bevorzugt eine Aufteilung des Spektrums in Bänder erfolgt.

Bevorzugt erfolgt das Verfahren so, wie dies bereits oben im Hinblick auf die erfindungsgemäße Antenne und/oder das erfindungsgemäße System näher beschrieben wurde.

Bei dem Verfahren kann es sich um ein Verfahren zu Überwachung mindestens einer Antenne, wie sie oben beschrieben wurde, handeln. Alternativ oder zusätzlich erfolgt das Verfahren unter Verwendung eines Systems, wie es oben näher beschrieben wurde.

Die vorliegende Erfindung wird nun anhand von Ausführungsbeispielen und Figuren näher beschrieben.

Dabei zeigen:
- Fig. 1:: ein erstes Ausführungsbeispiel eines erfindungsgemäßen Systems mit einem Ausführungsbeispiel einer erfindungsgemäßen Antenne,

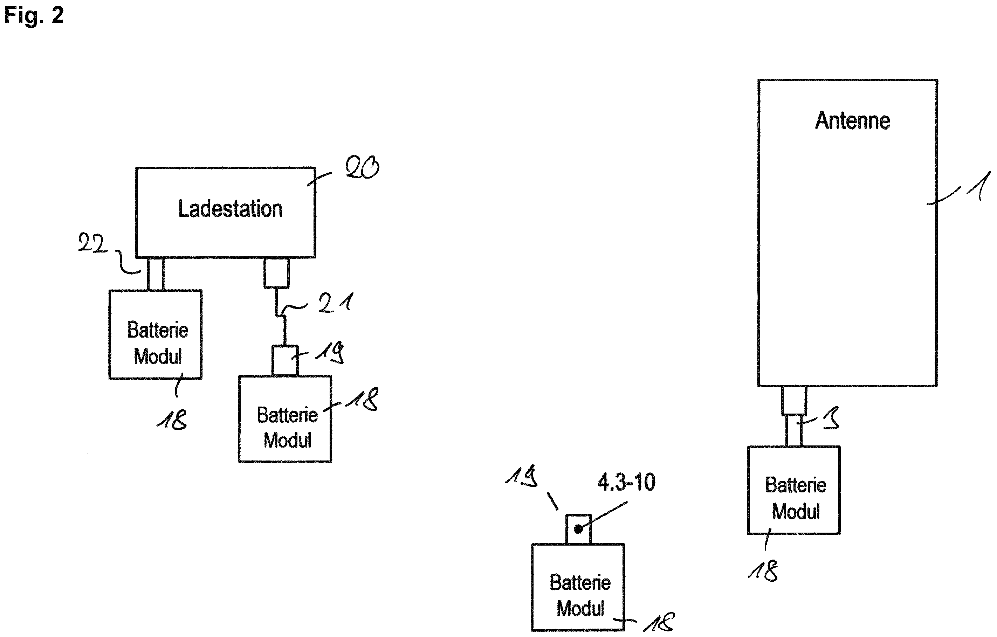

- Fig. 2:: ein Ausführungsbeispiel für die Stromversorgung der Datenerfassungseinheit der Antenne während dem Transport und/oder der Lagerung der Antenne,
- Fig. 3:: ein Diagramm, welches einen ersten Schritt einer durch ein Ausführungsbeispiel einer Datenerfassungseinheit durchgeführten Datenreduktion beschreibt,
- Fig. 4: ein Diagramm, welches einen zweiten Schritt einer durch ein Ausführungsbeispiel einer Datenerfassungseinheit durchgeführten Datenreduktion beschreibt,
- Fig. 5: ein Ausführungsbeispiel einer erfindungsgemäß übertragenen Datenmatrix mit Einträgen zu den Messwerten mehrerer Sensoren, und
- Fig. 6:: ein Diagramm, welches eine Auswertung durch ein Ausführungsbeispiel einer erfindungsgemäßen Auswerteeinheit wiedergibt.

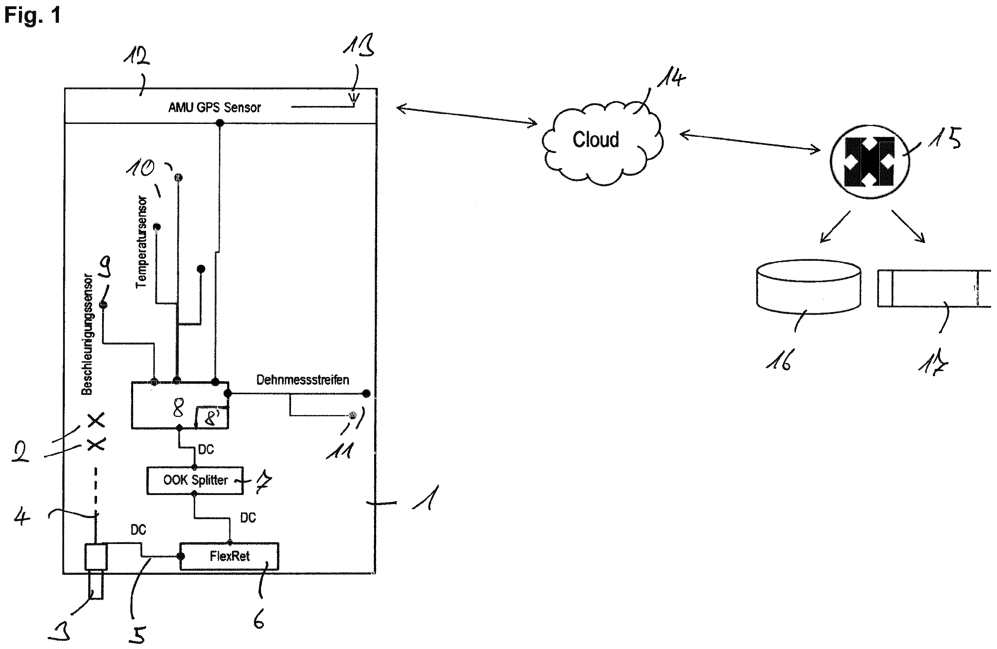

Fig. 1 zeigt ein Ausführungsbeispiel einer erfindungsgemäßen Antenne und eines erfindungsgemäßen Systems.

Das erfindungsgemäße System umfasst eine Antenne 1, eine Datenbank 16 und eine Auswerteeinheit 17, welche durch eine Institution 15 betrieben werden. Die Kommunikation zwischen der Antenne 1 und der Datenbank 16 erfolgt bevorzugt durch die Cloud 14. Das System umfasst üblicherweise eine Vielzahl von Antennen, welche mit der Datenbank 16 kommunizieren. Die Antennen sind üblicherweise auf eine Mehrzahl von Standorten verteilt.

Im Ausführungsbeispiel handelt es sich bei der Antenne 1 um eine Mobilfunkantenne für eine Mobilfunkbasisstation. Die Antenne weist ein nicht im Detail dargestelltes Gehäuse und Befestigungselemente zur mechanischen Befestigung, bspw. an einem Mast, auf.

Die Antenne weist eine Mehrzahl von Strahlern 2 auf, von welchen in Fig. 1 lediglich zwei Strahler schematisch dargestellt sind. Bevorzugt sind die Strahler in mehreren Spalten und/oder Reihen angeordnet und bilden ein oder mehrere Strahlerarrays. Dabei ist bevorzugt zumindest der Tilt-Winkel eines oder mehrerer Strahlerarrays verstellbar, insbesondere über die Verstellung eines oder mehrerer nicht dargestellter Phasenschieber. Hierfür ist im Ausführungsbeispiel ein als FlexRet bezeichneter Antrieb 6 vorgesehen, welcher die Phasenschieber elektromotorisch verstellt.

Die Antenne weist einen oder mehrere Ports 3 zum Versorgen der Strahler 2 mit HF-Signalen auf. Im Ausführungsbeispiel erfolgt über die Ports gleichzeitig eine Energieversorgung der Komponenten der Antenne, insbesondere eine Energieversorgung des elektrischen Antriebs 6 und/oder der Datenerfassungseinheit 8. Hierfür ist an dem Port 3 ein Signaltrenner vorgesehen, welcher einen an dem Port 3 anliegenden Gleichstromanteil von dem HF-Signal abtrennt und über eine Leitung 5 dem Antrieb 6 und der Datenerfassungseinheit 8 zur Verfügung stellt.

Über den Port 3 kann weiterhin eine Kommunikation mit der Basisstation und/oder den Systemkomponenten erfolgen, bspw. über AISG. Hierfür steht die Datenerfassungseinheit 8 über den OOK Splitter 7 mit dem Port 3 in Verbindung. Alternativ oder zusätzlich kann eine Kommunikation mit den Systemkomponenten auch über eine drahtlose Datenkommunikationseinheit 13 erfolgen. Bevorzugt ist die Kommunikation zwischen der Datenerfassungseinheit 8 und der externen Datenbank 16 unabhängig von der oder den Basisstationen, welche die Antenne mit HF-Signalen versorgen.

Gemäß der vorliegenden Erfindung weist die Antenne 1, eine Datenerfassungseinheit 8, einen Speicher 8' und mindestens einen Sensor 9, 10, 11 zur Erfassung einer mechanischen und/oder elektrischen und/oder thermischen Belastung der Antenne auf. Dabei werden an bzw. in der Antenne Messwerte aufgenommen, verarbeitet und bspw. über die Cloud 14 an eine Datenbank 16 gesendet. Bevorzugt können diese Daten unabhängig vom Hersteller der Basisstation und/oder einem OEM Netzwerkausrüster Dritten zur Verfügung gestellt werden.

Erfindungsgemäß wird das Senden von Sensordaten in Echtzeit vermieden, indem die Sensordaten in der Antenne 1 zwischengespeichert werden. Zur Verringerung der zu übermittelnden Datenmenge werden die sequenziellen Messdaten zu einem Spektrum reduziert. Die Übermittlung der Daten an die Datenbank 16 erfolgt gemäß eines definierten Zeitintervalls und/oder auf Anforderung. In der Datenbank 16 erfolgt die Auswertung der Messwerte durch eine Auswerteeinheit 17 für die Zwecke Dritter.

Bevorzugt ermöglichen die erfassten und ermittelten Daten den Aufbau eines Lifecycle Control Systems. Hierfür werden die ermittelten Daten der Antenne 1 mit der jeweiligen Lebensdauerlinie dieses Antennentyps verglichen, wodurch eine Prognose zu der Lebensdauer der Antenne möglich ist. Weiterhin kann man diese Information für präventive Maßnahmen zur Wartung wie z.B. Austausch von Antennen verwenden. Weiterhin entsteht eine Datenbasis über die Belastungen der Antennen an den jeweiligen Standorten, insbesondere weltweit. Diese kann zur Dimensionierung und/oder Optimierung der Antennen und/oder zur Definition der Schärfegrade der Validierungstests herangezogen werden. Auch lassen sich Rückschlüsse auf die Netzwerkperformance ziehen. Durch die Cloud 14 wird auch die Übertragung und Einspielung von Software-Updates für die Elektronik in der Antenne 1 möglich.

Im Rahmen der vorliegenden Erfindung werden daher von der mechanischen und/oder elektrischen und/oder thermischen Belastung bzw. dem Betriebszustand einer Antenne 1 Rückschlüsse auf die mechanischen und elektrischen Parameter der Antenne gezogen. Hierfür erfolgen zunächst eine Messung und eine Aufbereitung von Werten der Antenne, wobei die Messung bevorzugt im Lager, während des Transportes und im Einsatz erfolgt. Durch Vergleich mit Erfahrungswerten wie einer Lebensdauerlinie werden Rückschlüsse auf die Veränderung der elektrischen und mechanischen Eigenschaften der Antenne und deren Lebensdauer ermöglicht.

Hierfür müssen diese Größen an bzw. in der Antenne erfasst werden. Die erfassten Größen werden in und an der Antenne gesammelt, in der Antenne verarbeitet und in Datenpaketen in der Antenne zwischengespeichert. Die Datenpakete werden mit den Standortdaten und Antennen-inhärenten Daten, wie Seriennummer etc. versehen, damit die erfassten Größen den Antennen und Standorten zuordenbar sind. Diese Datenpakete werden an eine Institution 15 außerhalb der Antenne verschickt, bspw. über verschiedene Dienste durch eine Cloud 14. Diese Institution 15 speichert die Datenpakete in einer Datenbank 16 und verarbeitet die Daten durch eine Auswerteeinheit 17 weiter.

Konkret werden im Ausführungsbeispiel Lasten, Beschleunigungen, Temperaturen und/oder die elektrische Leistung, die an die Antenne gegeben wird, über Sensoren 9, 10, 11 erfasst. Aus den erfassten Messwerten werden durch eine Berechnungssoftware der Datenerfassungseinheit 8 Spektren ermittelt. Die Datenerfassungseinheit weist bevorzugt einen Mikrocontroller auf, auf welchem eine Software abläuft, welche die Funktionen der Datenerfassungseinheit implementiert. Die Messwerte und/oder Lastspektren werden in einem Speicher 8' der Antenne zwischengespeichert. In einem vorgegebenen Abstand werden Datenpakete, welche die Lastspektren umfassen, mit den Standortdaten und Antennen-inhärenten Daten, wie Seriennummer etc. versehen, damit die erfassten Größen den Antennen und Standorten zuordenbar sind, und an die Datenbank 16 übermittelt.

Durch eine Auswerteeinheit 17 erfolgt ein Abgleich mit einer mechanischen, elektrischen und/oder thermischen Lebensdauer- bzw. Wöhlerkurve, und eine Berechnung der Materialermüdung mechanischer, elektrischer und thermischer Größen und deren Einfluss auf die Funktion der Antenne (elektrischen Parameter). Eine im Versuch unter Annahme eines bestimmten Spektrums ermittelte Wöhlerkurve, welche in der Auswerteeinheit abgespeichert ist, ermöglicht die Berechnung der Lebensdauer der Antenne. Es können so Rückschlüsse auf die Veränderung bzw. Verschlechterung der mechanischen und elektrischen Parameter der Antenne geschlossen werden.

Die spezifische Ausgestaltung der einzelnen Komponenten und Schritte gemäß der vorliegenden Erfindung werden im Folgenden anhand der Figuren näher dargestellt. Dabei können die einzelnen Aspekte sowohl unabhängig voneinander, als auch in Kombination verwirklicht sein:

### Datenerfassung

In der Antenne werden durch Sensorapplikationen 9, 10, 11 folgende Werte erfasst:
- Applikation von Dehnmessstreifen 11 auf Befestigungselementen der Antenne am Mast und auf internen Stellen. Auf Basis von FEM Analysen werden diese Positionen festgelegt und die Wirksamkeit der Signale mittels Test nachgewiesen. Es können aber auch Kraftmessdosen oder kalibrierte Strukturen wie Befestigungselemente benutzt werden.
- Applikation von Beschleunigungsaufnehmern 9 auf einer geeigneten Stelle oder integriert in der Platine, welche die Beschleunigungen der Antenne bestmöglich erfasst.
- Applikation von Temperatursensoren 10 auf kritischen Platinen, Lötstellen oder Bauteilen und außen auf der Antenne; z.B. Phasenschieber etc.
- Erfassung der Antennenleistung durch Elektronik bzw. Temperaturmessung an geeigneten Stellen in der Antenne

In der Antenne befindet sich zusätzlich noch eine Datenerfassungseinheit 8 und die Antenna Monitoring Unit (AMU) 12 mit GPS Sensor. Der GPS Sensor berechnet die Position des Standortes der Antenne. Die Datenerfassungseinheit 8 und die AMU müssen sich nicht in der Antenne befinden, sondern es kann sich dabei auch um ein oder mehrere extern montierte Module handeln.

### Steuerung

In der AMU befindet sich eine virtuelle CCU zur Kontrolle der einzelnen Sensoren und deren Kommunikation innerhalb der Antenne. Bei der virtuellen CCU handelt es sich um eine Software. Das Kommunikationsmodul (Hardware) kann sich auch außerhalb der Antenne befinden. Es wird dann als ComModule bezeichnet. Die Steuerungsfunktionen sind im Ausführungsbeispiel wie folgt verteilt:
- Die Datenerfassungseinheit 8 verarbeitet die Sensordaten und bündelt die Daten in Pakete und stellt diese bereit
- Die Steuerung der Datenerfassungseinheit 8 und die Kommunikation nach außen zum Server übernimmt die virtuelle CCU und/oder das ComModule.
- Die Stromversorgung innerhalb der Antenne wird durch die FlexRet 6 bereitgestellt.

### Datengenerierung:

Bspw. können folgende Sensoren/Sensortypen eingesetzt werden:

| Messgröße | Ort | Messsignal |
|---|---|---|
| Temperatur PT100 | Installiert auf der Messplatine oder mit Kabel auf einer heißen Stelle | Ohm, °C |
| Antennenleistung | Erfassung der Leistung jedes Ports mit Richtkoppler. | Volt, Ampere, Watt |
| Beschleunigung | Installiert auf der Messplatine, wenn diese nahe an einer Masthalterung platziert ist | pF |
| Antennenleistung | Ports, Phasenschieber | °C |

Die Antennenleistung kann auch durch Protokollierung der angeforderten Leistung erfasst werden.

### Datenspeicherung:

Die Daten werden mit einer zu bestimmenden Frequenz erfasst und in der Datenerfassungseinheit 8 abgespeichert.
- Temperatur: zwischen 0,01 Hz und 1 Hz; bspw. ca. 0,1 Hz
- Antennenleistung: zwischen 0,01 Hz und 1 Hz; bspw. ca. 0,1 Hz
- Beschleunigung: zwischen 10 Hz und 10000 Hz; bspw. ca. 1000 Hz

Die Datenerfassungszeit beträgt je nach Speichergröße bspw. 1 h bis 1 Woche oder 1 Monat.

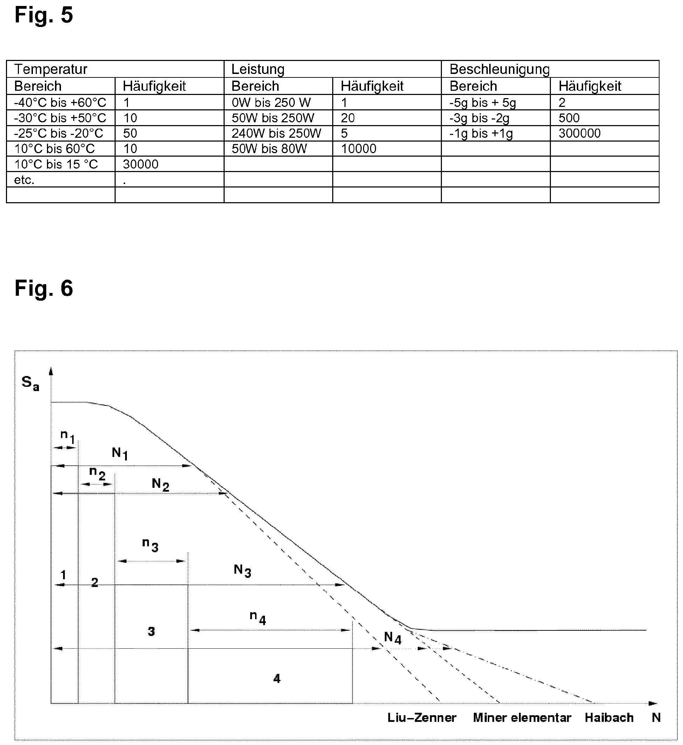

Ist der Speicher bis zu einem vorgegebenen Wert gefüllt, werden die als Sequenz abgelegten Daten zu einem Spektrum komprimiert und addiert und in einer Matrix abgelegt. Exemplarische Werte für eine solche Matrix sind in Fig. 5 dargestellt. Die Häufigkeit der Werte in Matrix wächst mit der Zeit.

Nur die gegenüber der gemessenen Sequenz wesentlich reduzierte Datenmenge des Spektrums wird über die Cloud an die Datenbank 16 transferiert.

### Spektrumserstellung:

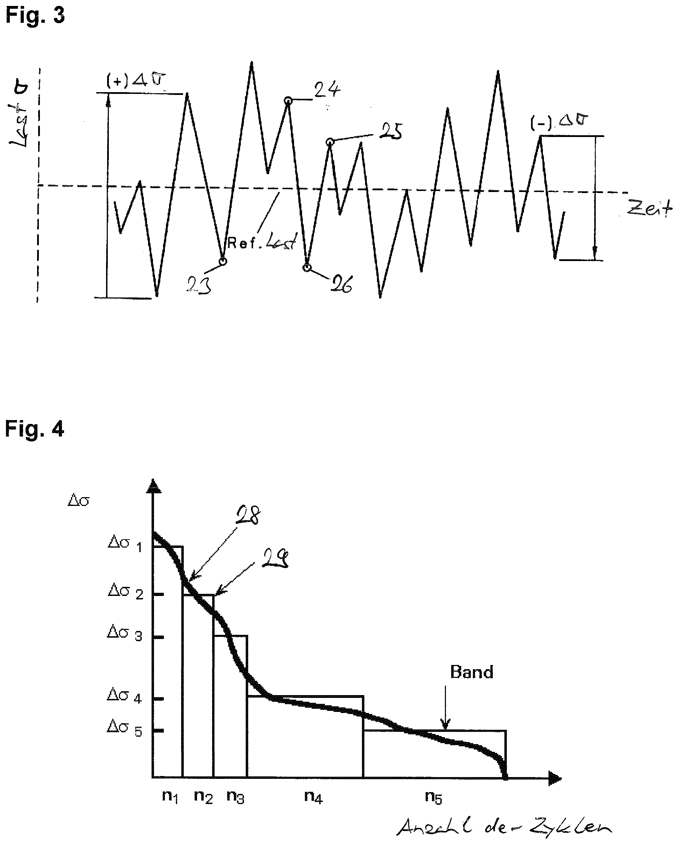

Die Erstellung eines Spektrums wird anhand von Fig. 3 und Fig. 4 näher dargestellt:
Die Messdaten werden zunächst sequentiell erfasst. Da diese Datenmenge viel zu groß für einen Datentransfer ist, muss sie charakteristisch komprimiert werden. Hierzu werden aus den sequentiellen Messdaten zunächst Minima 23, 26 und Maxima 24, 25 und aus diesen Zyklen bzw. Halbzyklen ermittelt. Die Zyklen entsprechen jeweils einer Laständerung Δσ. Bevorzugt werden gemäß einer vorgegebenen Regel Zyklen ausgewählt. Die Auswahl und Bestimmung der Zyklen erfolgt bevorzugt nach der Rainflow-Methode.

Ein reales Spektrum 28 solcher Laständerungen Δσ ist in Fig. 4 dargestellt. Gemäß einer vorgegebenen sinnvollen Abstufung Δσ₁ bis Δσ₅ werden die Zyklen in mehreren Bändern mit einer vorgegebenen Bandbreite sortiert, und die Anzahl n₁ bis n₅ der Zyklen pro Band in der oben beschriebenen Matrix für einen zu definierenden Zeitraum addiert. Die Berechnung des Spektrums erfolgt durch einen antenneninternen Mikrocontroller.

### Datenübertragung:

Die Datenerfassungseinheit 8 bündelt die Daten in Pakete und stellt diese bereit.

Die Steuerung der Datenerfassungseinheit 8 und die Kommunikation nach außen zum Server übernimmt die virtuelle CCU und/oder das ComModule.

Die Übertragung der Daten, im speziellen der Inhalt der Matrix zusammen mit den Antennen-spezifischen Daten wie Seriennummer, erfolgt zu einem festgelegten, sich wiederholenden Zeitpunkt. Nach der Datenübertragung werden die sequentiellen Messdaten und der Inhalt der Matrix in der Datenerfassungseinheit 8 gelöscht.

Die virtuelle CCU steuert den Zeitpunkt der Datenerfassung und deren Übertragung auf den Server in der Institution. Das Löschen der übertragenden Daten im Speicher der Datenerfassungseinheit 8 steuert ebenfalls die virtuelle CCU.

### Datenbank/Auswerteeinheit:

In der Datenbank wird für jede Antenne ein File angelegt, in welchem die Daten der Antenne wie Name, Standort, Azimut, etc. abgelegt werden. In dieses File werden die einzelnen Matrizen geordnet nach Sendedatum abgelegt. Zusätzlich werden die Daten der einzelnen Matrizen in einer Gesamtmatrix dieser Antenne addiert.

Für jeden Antennentyp ist eine aus Versuchen ermittelte Ermüdungskennlinie hinterlegt, und zwar bevorzugt für folgende Werte:
- Temperatur
- Leistung
- Windlast/Vibration

Die Temperaturermüdung und die Leistungsermüdung kann beispielsweise gem. Minerregel direkt aus dem erfassten Spektrum und der Ermüdungskennlinie berechnet werden. Es gibt jedoch auch andere Methoden.

Die gemessene Beschleunigung und/oder die gemessenen Kräfte können mittels einer Übertragungsfunktion in eine Windlast umgerechnet werden. Die Basis dafür sind Versuche, welche eine Korrelation zwischen dem Signal der Beschleunigungs- und/oder Kraftsensoren und der Windlast/Vibration ermitteln. Daraus kann dann für definierte Stellen in der Antenne die Strukturermüdung berechnet werden und/oder standortabhängige Windlasten ermittelt werden.

Die Berechnung der Lebensdauer erfolgt bevorzugt nach dem Verfahren der linearen Schadensakkumulation, welches in Fig. 6 dargestellt ist. Zur Berechnung der Lebensdauer wird das Amplitudenkollektiv in einzelne Rechteckkollektive mit konstanter Amplitude *Sₐ* und einer Teilschwingspielzahl *nᵢ* unterteilt (getreppt). Nach dem Verfahren der linearen Schadensakkumulation wird nun für jedes Teilkollektiv eine Teilschädigung berechnet, indem die Teilschwingspielzahl durch die maximal ertragbare Schwingspielzahl *Nᵢ* bei *Sₐ* der Lebensdauerkennlinie geteilt wird. Die Teilschädigungen aller Teilkollektive werden aufsummiert und ergeben die Gesamtschädigung D des Bauteils. $D = \sum \frac{{n}_{i}}{{N}_{i}}$

Überschreitet die Schädigung den Wert 1, so ist mit einem Bruch bzw. Anriss im Bauteil, einem thermischen Versagen oder einem Leistungsversagen unter dem betrachteten Belastungskollektiv zu rechnen. Als Lebensdauerkennlinie kann bspw. eine Kennlinie nach Liu-Zenner, nach Miner oder nach Halbach eingesetzt werden, welche in Fig. 6 näher dargestellt sind.

### Stromversorgung der Elektronik:

Damit auch während der Lagerung, Transport und Montage der Antenne Daten erfasst werden können, welche auf die Behandlung der Antenne in dieser Phase schließen lassen, soll die Elektronik in der Antenne durch ein zusätzliches Batteriemodul und/oder einen oder mehrere Kondensatoren mit Strom versorgt werden.

Das Batteriemodul wird auf einen Port der Antenne gesteckt und versorgt dadurch die Elektronik in der Antenne mit Strom. Die Schnittstelle ist ein 4.3-10 Kenia Stecker. Über den Stecker wird einerseits vor der Applikation an die Antenne die Batterie geladen und andererseits im auf die Antenne gesteckten Zustand die Sensorik und Datenspeicherung und Aufbereitung mit Energie versorgt.

Nach der Montage der Antenne soll das Batteriemodul zur Wiederverwendung an den Hersteller zurückgeschickt werden. Das Batteriemodul ist Teil der Verpackung.

Alternativ oder zusätzlich kann die Antenne einen eingebauten Energiespeicher aufweisen, bsp. einen Kondensator, welcher vor Auslieferung aufgeladen wird.

Ist das Batteriemodul angeschlossen, und/oder die Antenne von der externen Stromversorgung getrennt, wird dies von der Elektronik in der Antenne erkannt, die AMU sendet die Daten nicht nach außen. Die Sensordaten werden weiterhin verarbeitet und in der AMU und/oder in der Collector Unit / Data Dispatcher zwischengespeichert. Wird die Antenne aufgebaut das Batteriemodul entfernt und über die Flexret mit Strom versorgt, werden die gesammelten und komprimierten Daten des Speichers gesendet.

### Vorteile der erfindungsgemäßen Lösung

Von Antennenhersteller, OEM Netzwerkausrüstern und Dritten unabhängiges Datenmanagement für Netzbetreiber.

Netzbetreiber kann entscheiden welche Dritte (z.B. OEM, Antennenhersteller, Serviceprovider) auf Antennendaten, die in der Cloud abliegen, zugreifen kann.

Daten können für Sitemapping- und SON-Anwendungen verwenden werden und sind zentral verwaltbar.

Von der mechanischen und thermischen Belastung der Antenne kann auf Antennenparameter Rückschlüsse gezogen werden.

Generierung von einer umfassenden Datenbasis über den Einsatzort und der mechanischen, thermischen und elektrischen Belastung. Dies ist die Basis für zukünftige Antennenentwicklungen.

Der Hersteller kann Serviceapplikationen generieren und anbieten, z.B. durch die Überwachung von Antennenparametern den Austausch anbieten bzw. durchführen, bevor zu z.B. mechanischen Ausfällen und VSWR Alarmen kommt.

## Patentansprüche

1. System aus einer Mehrzahl von Antennen (1), insbesondere Mobilfunkantennen, einer zentralen externen Datenbank (16) und einer Auswerteeinheit (17),
wobei die Antennen (1) mindestens einen Strahler (2), eine Datenerfassungseinheit (8), einen Speicher (8') und mindestens einen Sensor (9, 10, 11) zur Erfassung einer mechanischen und/oder thermischen Belastung der Antenne (1) aufweisen, wobei die Datenerfassungseinheit (8) Messdaten des mindestens einen Sensors (9, 10, 11) erfasst und in dem Speicher (8') zwischenspeichert,
wobei die Datenerfassungseinheit (8) auf Grundlage einer Mehrzahl von in dem Speicher (8') gespeicherten Messdaten Datenpakete erzeugt und an eine externe Datenbank (16) übermittelt, wobei die Datenerfassungseinheit (8) eine Datenreduktion der Messdaten durchführt,
wobei die Antennen (1) einen oder mehrere Beschleunigungssensoren (9) und einen oder mehrere Temperatursensoren (10) umfasst,
wobei die Auswerteeinheit (17) für jede Antenne (1) mindestens einen aus den von der Antenne (1) übermittelten Datenpaketen generierten Wert mit einer zu dem entsprechenden Antennentyp in der Auswerteeinheit (17) gespeicherten Kennlinie vergleicht, und/oder wobei die Auswerteeinheit (17) antennenstandortbezogene Daten für die mechanischen und thermischen Belastungen der Antennen (1) ermittelt,
wobei aus den Messdaten eines oder mehrerer Sensoren (9, 10, 11) erzeugte und durch die Antenne (1) übermittelte Daten durch die Auswerteeinheit (17) in Parameter umgerechnet werden, für welche in der Auswerteeinheit (17) eine oder mehrere Kennlinien abgespeichert sind.

2. System nach Anspruch 1, wobei die Datenerfassungseinheit (8) die Messdaten nach der Übermittlung der Datenpakete an die externe Datenbank (16) zumindest teilweise aus dem Speicher (8') löscht.

3. System nach Anspruch 1 oder 2, wobei die Datenerfassungseinheit (8) die Übermittlung der Datenpakete in vorbestimmten Abständen und/oder auf Anforderung durch eine externe Stelle hin vornimmt,
und/oder wobei die Datenerfassungseinheit (8) die Messdaten mit einer vorbestimmten Frequenz erfasst, bevorzugt mit einer Frequenz größer 0,001 Hz, weiter bevorzugt mit einer Frequenz größer 0,01 Hz,
und/oder wobei die Übermittlung an die externe Datenbank (16) mit einem vorbestimmten Abstand von mehr als 1 Minute, bevorzugt von mehr als 10 Minuten, weiter bevorzugt von mehr als 30 Minuten erfolgt,
und/oder wobei die Datenerfassungseinheit (8) die Datenpakete auf Grundlage einer Mehrzahl von zeitlich aufeinanderfolgenden Messdaten erzeugt, insbesondere auf Grundlage einer Mehrzahl von zeitlich aufeinanderfolgenden Messdaten des gleichen Sensors (9, 10, 11), wobei die Datenerfassungseinheit (8) bevorzugt die Datenpakete auf Grundlage von mehr als 10 aufeinanderfolgenden Messdaten erzeugt, weiter bevorzugt auf Grundlage von mehr als 100 aufeinanderfolgenden Messdaten.

4. System nach einem der vorangegangenen Ansprüche, wobei die Datenreduktion bevorzugt eine Auswertung der Messdaten im Hinblick auf Maximalwerte, Minimalwerte und/oder Zyklen und/oder eine Erzeugung eines Spektrums (28), insbesondere eines Spektrums (28) von Maximalwerten, Minimalwerten und/oder Zyklen, umfasst, wobei weiter bevorzugt eine Aufteilung des Spektrums (28) in Bänder erfolgt,
und/oder wobei die Datenerfassungseinheit (8) zur Erzeugung der Datenpakete, welche an die externe Datenbank (16) übertragen werden, eine Datenreduktion der in dem Speicher (8') abgespeicherten Messdaten durchführt,
und/oder wobei die Datenerfassungseinheit (8) die mit einer vorbestimmten Frequenz erfassten Messdaten erst nach der Durchführung einer Datenreduktion abspeichert.

5. System nach einem der vorangegangenen Ansprüche, wobei die Antenne mehrere unterschiedliche Sensoren (9, 10, 11) zur Erfassung einer mechanischen und/oder thermischen Belastung der Antenne (1) aufweist, deren Messdaten in dem Speicher (8') zwischengespeichert werden, wobei die von der Datenerfassungseinheit (8) übermittelten Datenpakete Messdaten von mehreren Sensoren (9, 10, 11) umfassen, welche gemeinsam an eine externe Datenbank (16) übermittelt werden, wobei die Daten bevorzugt in Form einer Matrix übertragen werden.

6. System nach einem der vorangegangenen Ansprüche, wobei die Antenne (1) mindestens einen und bevorzugt mehrere der folgenden Sensoren (9, 10, 11) umfasst:
- einen oder mehrere Sensoren (11) zur Messung mechanischer Belastungen der Antennenstruktur, wobei bevorzugt mindestens ein Sensor (11) an einem Befestigungselement der Antenne (1) vorgesehen und/oder diesem zugeordnet ist, insbesondere an einem Befestigungselement zur Befestigung der Antenne (1) an einem Mast;
- mehrere Beschleunigungssensoren (9) welche alle 6 Freiheitsgrade erfassen;
- mindestens einen Temperatursensor (10) zur Messung der Temperatur eines Bauteils der Antenne (1), welches sich durch den Betrieb der Antenne (1) erwärmt, insbesondere der an einem elektronischen Bauteil und/oder einer Lötstelle und/oder einem Port (3) der Antenne (1) vorgesehen ist und/oder mindestens einen Temperatursensor (10) zur Messung der Temperatur der Umgebung und/oder der Antennenstruktur;
- einen oder mehrere Sensoren zur Erfassung der Antennenleistung, wobei bevorzugt die Antennenleistung für jeden Port (3) der Antenne einzeln gemessen und/oder abgespeichert wird, und/oder wobei bevorzugt die Erfassung der Antennenleistung durch mindestens einen Richtkoppler und/oder durch mindestens einen Temperatursensor und/oder wobei die Erfassung der Antennenleistung durch passive Aufzeichnung der angeforderten Leistung erfolgt.

7. System nach einem der vorangegangenen Ansprüche, wobei die Datenpakete neben aus den Messdaten erzeugten Daten weitere Antennendaten umfassen, wobei die weiteren Antennendaten bevorzugt mindestens einen Identifikator und/oder geografische Standortdaten und/oder Daten zur Orientierung der Antenne (1) und/oder Antennenkonfigurationsdaten umfassen.

8. System nach einem der vorangegangenen Ansprüche, wobei die Datenerfassungseinheit (8) die Messdaten während der Lagerung, des Transports und/oder während des Betriebs erfasst, wobei die Datenerfassungseinheit (8) die Messdaten bevorzugt zumindest während der Lagerung und/oder des Transports erfasst, wobei die Antenne (1) die Messdaten bevorzugt während der Lagerung und/oder des Transports zwischenspeichert und erst bei oder nach der Inbetriebnahme auf Grundlage dieser Messdaten erzeugte Datenpakete an die externe Datenbank (16) überträgt.

9. System nach Anspruch 8, wobei die Antenne (1) eine autonome Energieversorgung aufweist, insbesondere einen Speicher für elektrische Energie, insbesondere eine Batterie, Kondensator oder einen Akkumulator, wobei die autonome Energieversorgung bevorzugt ein separates Element bildet, welches an einen Anschluss der Antenne (1) anschließbar ist, um die Antenne (1) mit Energie zu versorgen, wobei die autonome Energieversorgung bevorzugt an einen Port (3) der Antenne (1) anschließbar ist, und/oder wobei bevorzugt die autonome Energieversorgung in die Antenne (1) integriert ist, und/oder wobei die Datenerfassungseinheit (8) bevorzugt eine angeschlossene autonome Energieversorgung erkennt und/oder erkennt, dass keine externe Energieversorgung vorliegt, und in diesem Zustand keine Daten überträgt und/oder die Parameter der Datenerfassung ändert.

10. System nach einem der vorangegangenen Ansprüche wobei die Auswerteeinheit (17) eine Veränderung der mechanischen Eigenschaften und/oder einen Schädigungswert und/oder einen Rest-Lebensdauerwert und/oder Änderungen in der Position und Ausrichtung der Antennen (1) ermittelt, und/oder wobei es sich um eine Ermüdungskennlinie handelt.

11. System nach einem der vorangegangenen Ansprüche, wobei die von den Antennen (1) in vorbestimmten Abständen übermittelten Datenpakete in der Datenbank (16) für die jeweiligen Antennen (1) gesammelt werden, und/oder wobei die der von einer Antenne (1) übermittelten Daten ein Spektrum (28) umfassen, welches bevorzugt in Bänder aufgeteilt ist, wobei die Auswerteeinheit (17) bevorzugt die zu unterschiedlichen Zeitpunkten von der Antenne (1) übermittelten Spektren (28) addiert, um ein Gesamtspektrum zu erzeugen, und/oder wobei die Auswertung auf Grundlage der Gesamtheit der von der Antenne (1) übermittelten Datenpakete erfolgt,
und/oder
wobei die Umrechnung durch eine Übertragungsfunktion erfolgt, und/oder wobei Daten zu einer gemessenen Beschleunigung und/oder zu gemessenen Kräften in eine Windlast umgerechnet werden, wobei bevorzugt ein standortspezifisches Windlastprofil ermittelt wird.

12. Verfahren zu Überwachung mindestens einer Antenne (1), insbesondere einer Mobilfunkantenne, insbesondere einer Mobilfunkantenne einer Mobilfunkbasisstation, wobei die Antenne (1) mindestens einen Strahler (2), eine Datenerfassungseinheit (8), einen Speicher (8') und mindestens einen oder mehrere Beschleunigungssensoren (9) und einen oder mehrere Temperatursensoren (10) aufweist, wobei die Datenerfassungseinheit (8) durch den einen oder die mehreren Beschleunigungssensoren (9) und den einen oder die mehreren Temperatursensoren (10) ermittelte Messdaten erfasst und in dem Speicher (8') abspeichert,
wobei die Datenerfassungseinheit (8) auf Grundlage einer Mehrzahl von in dem Speicher (8') gespeicherten Messdaten eines oder mehrere Datenpakete erzeugt und an die zentrale Datenbank (16) übermittelt, wobei die übermittelten Datenpakete in der Datenbank (16) für die Antenne (1) gesammelt und zur Überwachung der Antenne (1) durch eine Auswerteeinheit (17) ausgewertet werden, wobei die Datenerfassungseinheit (8) eine Datenreduktion der Messdaten durchführt,
wobei eine Auswerteeinheit (17) eine Veränderung der mechanischen Eigenschaften und/oder einen Schädigungswert und/oder einen Rest-Lebensdauerwert der Antenne (1) ermittelt, wobei die Auswerteeinheit (17) mindestens einen aus den von der Antenne (1) übermittelten Datenpaketen generierten Wert mit einer zu dem entsprechenden Antennentyp in der Auswerteeinheit gespeicherten Kennlinie vergleicht,
wobei aus den Messdaten eines oder mehrerer Sensoren (9, 10, 11) erzeugte und durch die Antenne (1) übermittelte Daten durch die Auswerteeinheit (17) in Parameter umgerechnet werden, für welche in der Auswerteeinheit (17) eine oder mehrere Kennlinien abgespeichert sind.

13. Verfahren nach Anspruch 12, wobei es sich bei der gespeicherten Kennlinie bevorzugt um eine Ermüdungskennlinie handelt, und/oder wobei auf Grundlage der Auswertung durch die Auswerteeinheit präventive Maßnahmen zur Wartung und/oder zum Austausch von Antennen (1) erfolgen.

14. Verfahren nach Anspruch 12 oder 13, wobei die Datenerfassungseinheit (8) die Übermittlung der Datenpakete in vorbestimmten Abständen und/oder auf Anforderung durch eine externe Stelle hin vornimmt und/oder wobei die Datenreduktion bevorzugt eine Auswertung der Messdaten im Hinblick auf Maximalwerte, Minimalwerte und/oder Zyklen und/oder eine Erzeugung eines Spektrums (28), insbesondere eines Spektrums (28) von Maximalwerten, Minimalwerten und/oder Zyklen, umfasst, wobei weiter bevorzugt eine Aufteilung des Spektrums (28) in Bänder erfolgt.

15. Verfahren nach einem der Ansprüche 12 bis 14 zur zu Überwachung mindestens einer Antenne (1) nach einem der Ansprüche 1 bis 9 oder unter Verwendung eines Systems nach einem der Ansprüche 10 bis 11.

## Claims

1. System consisting of a plurality of antennas (1), in particular wireless communication antennas, a central external database (16) and an evaluation unit (17),
wherein the antennas (1) comprise at least one radiator (2), a data acquisition unit (8), a memory (8') and at least one sensor (9, 10, 11) for detecting a mechanical and/or thermal load on the antenna (1), wherein the data acquisition unit (8) acquires measurement data of the at least one sensor (9, 10, 11) and caches it in the memory (8'),
wherein the data acquisition unit (8) generates data packets on the basis of a plurality of measurement data stored in the memory (8') and transmits them to an external database (16), wherein the data acquisition unit (8) performs a data reduction on the measurement data,
wherein the antennas (1) comprise one or more acceleration sensors (9) and one or more temperature sensors (10),
wherein the evaluation unit (17) compares, for each antenna (1), at least one value generated from the data packets transmitted by the antenna (1) with a characteristic curve stored in the evaluation unit (17) for the corresponding antenna type, and/or wherein the evaluation unit (17) determines antenna-location-related data for the mechanical and thermal loads of the antennas (1),
wherein data generated from the measurement data of one or more sensors (9, 10, 11) and transmitted by the antenna (1) are converted by the evaluation unit (17) into parameters for which one or more characteristic curves are stored in the evaluation unit (17).

2. System according to Claim 1, wherein the data acquisition unit (8) at least partially deletes the measurement data from the memory (8') after the transmission of the data packets to the external database (16).

3. System according to Claim 1 or 2, wherein the data acquisition unit (8) performs the transmission of the data packets at predetermined intervals and/or on request by an external location,
and/or wherein the data acquisition unit (8) acquires the measurement data with a predetermined frequency, preferably with a frequency greater than 0.001 Hz, more preferably with a frequency greater than 0.01 Hz,
and/or wherein the transmission to the external database (16) is carried out at a predetermined interval of more than 1 minute, preferably of more than 10 minutes, more preferably of more than 30 minutes,
and/or wherein the data acquisition unit (8) generates the data packets on the basis of a plurality of temporally consecutive measurement data, in particular on the basis of a plurality of temporally consecutive measurement data of the same sensor (9, 10, 11), wherein the data acquisition unit (8) preferably generates the data packets on the basis of more than 10 consecutive measurement data points, more preferably on the basis of more than 100 consecutive measurement data points.

4. System according to any one of the preceding claims, wherein the data reduction preferably comprises an evaluation of the measurement data with respect to maximum values, minimum values and/or cycles and/or a generation of a spectrum (28), in particular a spectrum (28) of maximum values, minimum values and/or cycles, wherein more preferably the spectrum (28) is divided into bands,
and/or wherein for generating the data packets which are transferred to the external database (16) the data acquisition unit (8) performs a data reduction of the measurement data stored in the memory (8'),
and/or wherein the data acquisition unit (8) stores the measurement data acquired with a predetermined frequency only after carrying out a data reduction.

5. System according to any one of the preceding claims, wherein the antenna comprises a plurality of different sensors (9, 10, 11) for detecting a mechanical and/or thermal load on the antenna (1), the measurement data of which are cached in the memory (8'), wherein the data packets transmitted by the data acquisition unit (8) comprise measurement data of a plurality of sensors (9, 10, 11), which are transmitted jointly to an external database (16), the data being preferably transmitted in the form of a matrix.

6. System according to any one of the preceding claims, wherein the antenna (1) comprises at least one and preferably a plurality of the following sensors (9, 10, 11):
- one or more sensors (11) for measuring mechanical loads on the antenna structure, wherein preferably at least one sensor (11) is provided on a mounting element of the antenna (1) and/or is assigned thereto, in particular on a mounting element for mounting the antenna (1) on a mast;
- a plurality of acceleration sensors (9) which detect all 6 degrees of freedom;
- at least one temperature sensor (10) for measuring the temperature of a component of the antenna (1) which is heated by the operation of the antenna (1), in particular which is provided on an electronic component and/or a solder joint and/or a port (3) of the antenna (1), and/or at least one temperature sensor (10) for measuring the temperature of the environment and/or the antenna structure;
- one or more sensors for detecting the antenna power, wherein the antenna power is preferably individually measured and/or stored for each port (3) of the antenna, and/or wherein the antenna power is preferably detected by at least one directional coupler and/or by at least one temperature sensor and/or wherein the detection of the antenna power takes place by passive recording of the requested power.

7. System according to any one of the preceding claims, wherein the data packets comprise further antenna data in addition to the data generated from the measurement data, wherein the further antenna data preferably comprise at least one identifier and/or geographical location data and/or data on the orientation of the antenna (1) and/or antenna configuration data.

8. System according to any one of the preceding claims, wherein the data acquisition unit (8) acquires the measurement data during storage, transport and/or during operation, wherein the data acquisition unit (8) preferably acquires the measurement data at least during storage and/or transport, wherein the antenna (1) preferably caches the measurement data during storage and/or transport and only transmits data packets generated on the basis of these measurement data to the external database (16) during or after commissioning.

9. System according to claim 8, wherein the antenna (1) has an autonomous power supply, in particular a storage unit for electrical energy, in particular a battery, capacitor or an accumulator, wherein the autonomous power supply preferably forms a separate element which is connected to a terminal of the antenna (1) in order to supply the antenna (1) with power, wherein the autonomous power supply can preferably be connected to a port (3) of the antenna (1), and/or wherein the autonomous power supply is preferably integrated in the antenna (1), and/or wherein the data acquisition unit (8) preferably detects a connected autonomous power supply and/or detects that there is no external power supply present, and in this state does not transfer data and/or changes the data acquisition parameters.

10. System according to any one of the preceding claims, wherein the evaluation unit (17) determines a change in the mechanical properties and/or a damage value and/or a residual service life value and/or changes in the position and alignment of the antennas (1), and/or wherein this is a fatigue characteristic curve.

11. System according to any one of the preceding claims, wherein the data packets transmitted by the antennas (1) at predetermined intervals are collected in the database (16) for the respective antennas (1), and/or wherein the data transmitted by an antenna (1) comprise a spectrum (28) which is preferably divided into bands, wherein the evaluation unit (17) preferably adds the spectra (28) transmitted from the antenna (1) at different times to produce an overall spectrum, and/or wherein the evaluation is based on the totality of the data packets transmitted by the antenna (1),
and/or
wherein the conversion is effected by a transfer function, and/or wherein data relating to a measured acceleration and/or to measured forces are converted into a wind load, wherein a location-specific wind load profile is preferably determined.

12. Method for monitoring at least one antenna (1), in particular a wireless communication antenna, in particular a wireless communication antenna of a wireless communication base station, wherein the antenna (1) has at least one radiator (2), a data acquisition unit (8), a memory (8') and at least one or more acceleration sensors (9) and one or more temperature sensors (10), wherein the data acquisition unit (8) acquires measurement data detected by the one or more acceleration sensors (9) and the one or more temperature sensors (10) and stores it in the memory (8'),
wherein the data acquisition unit (8) generates one or more data packets on the basis of a plurality of measurement data stored in the memory (8') and transmits them to the central database (16), wherein the transmitted data packets are collected in the database (16) for the antenna (1) and evaluated by an evaluation unit (17) for monitoring the antenna (1), wherein the data acquisition unit (8) performs a data reduction on the measurement data,
wherein an evaluation unit (17) determines a change in the mechanical properties and/or a damage value and/or a residual service life value of the antenna (1), wherein the evaluation unit (17) compares at least one value generated from the data packets transmitted by the antenna (1) with a characteristic curve stored in the evaluation unit (17) for the corresponding antenna type,
wherein data generated from the measurement data of one or more sensors (9, 10, 11) and transmitted by the antenna (1) are converted by the evaluation unit (17) into parameters for which one or more characteristic curves are stored in the evaluation unit (17).

13. Method according to Claim 12, wherein the stored characteristic curve is preferably a fatigue characteristic curve, and/or wherein preventive measures for maintenance and/or for the replacement of antennas (1) are carried out on the basis of the evaluation by the evaluation unit.

14. Method according to Claim 12 or 13, wherein the data acquisition unit (8) performs the transmission of the data packets at predetermined intervals and/or on request by an external location and/or wherein the data reduction preferably comprises an evaluation of the measurement data with respect to maximum values, minimum values and/or cycles and/or generation of a spectrum (28), in particular a spectrum (28) of maximum values, minimum values and/or cycles, wherein more preferably the spectrum (28) is divided into bands.

15. Method according to any one of Claims 12 to 14 for monitoring at least one antenna (1) according to any one of Claims 1 to 9 or using a system according to either of Claims 10 to 11.

## Revendications

1. Système composé d'une pluralité d'antennes (1), notamment des antennes de communication mobile, une base de données externe centrale (16) et une unité d'évaluation (17),
dans lequel les antennes (1) présentent au moins un émetteur de rayonnement (2), une unité d'acquisition de données (8), une mémoire (8') et au moins un capteur (9, 10, 11) pour détecter une charge mécanique et/ou thermique sur l'antenne (1), dans lequel l'unité d'acquisition de données (8) acquiert les données de mesure provenant d'au moins un capteur (9, 10, 11) et les stocke temporairement dans la mémoire (8'),
dans lequel l'unité d'acquisition de données (8) génère des paquets de données sur la base d'une pluralité de données de mesure stockées dans la mémoire (8') et les transmet à une base de données externe (16), dans lequel l'unité d'acquisition de données (8) effectue une réduction de données des données de mesure,
dans lequel les antennes (1) comprennent un ou plusieurs capteurs d'accélération (9) et un ou plusieurs capteurs de température (10),
dans lequel l'unité d'évaluation (17) compare au moins une valeur générée sur la base des paquets de données transmis par l'antenne (1) pour chaque antenne (1) avec une courbe caractéristique stockée dans l'unité d'évaluation (17) pour le type d'antenne correspondant et/ou dans lequel l'unité d'évaluation (17) détermine des données relatives à la position de l'antenne concernant les contraintes mécaniques et thermiques subies par les antennes (1),
dans lequel les données générées sur la base des données de mesure d'un ou plusieurs capteurs (9, 10, 11) et transmises par l'antenne (1) sont converties par l'unité d'évaluation (17) en paramètres, pour lesquels une ou plusieurs courbes caractéristiques sont enregistrées dans l'unité d'évaluation (17).

2. Système selon la revendication 1, dans lequel l'unité d'acquisition de données (8) efface au moins partiellement les données de mesure de la mémoire (8') après la transmission des paquets de données à la base de données externe (16).

3. Système selon la revendication 1 ou 2, dans lequel l'unité d'acquisition de données (8) transmet les paquets de données à intervalles prédéterminés et/ou à la demande d'une entité externe,
et/ou dans lequel l'unité d'acquisition de données (8) acquiert les données de mesure à une fréquence prédéterminée, de préférence à une fréquence supérieure à 0,001 Hz, et plus particulièrement une fréquence supérieure à 0,01 Hz,
et/ou dans lequel la transmission à la base de données externe (16) s'effectue à un intervalle prédéterminé supérieur à 1 minute, plus particulièrement supérieur à 10 minutes et plus particulièrement supérieur à 30 minutes,
et/ou dans lequel l'unité d'acquisition de données (8) génère les paquets de données sur la base d'une pluralité de données de mesure successives, notamment sur la base d'une pluralité de données de mesure successives provenant du même capteur (9, 10, 11), dans lequel l'unité d'acquisition de données (8) génère de préférence les paquets de données sur la base de plus de 10 données de mesure consécutives et plus particulièrement sur la base de plus de 100 points de mesure consécutifs.

4. Système selon une des revendications précédentes, dans lequel la réduction des données comprend de préférence une évaluation des données de mesure en fonction des valeurs maximales, valeurs minimales et/ou des cycles, et/ou une génération d'un spectre (28), notamment un spectre (28) de valeurs maximales, valeurs minimales et/ou de cycles, dans lequel le spectre (28) est de préférence divisé en bandes,
et/ou dans lequel l'unité d'acquisition de données (8) effectue une réduction des données de mesure stockées dans la mémoire (8') afin de générer les paquets de données, qui sont transférés vers la base de données externe (16),
et/ou dans lequel l'unité d'acquisition de données (8) ne stocke les données de mesure acquises à une fréquence prédéterminée qu'après avoir effectué une réduction des données.

5. Système selon une des revendications précédentes, dans lequel l'antenne présente plusieurs capteurs différents (9, 10, 11) pour détecter une contrainte mécanique et/ou thermique sur l'antenne (1), dont les données de mesure sont temporairement stockées dans la mémoire (8'), dans lequel les paquets de données transmis par l'unité d'acquisition de données (8) comprennent les données de mesure de plusieurs capteurs (9, 10, 11), qui sont transmises conjointement à une base de données externe (16), dans lequel les données sont transmises de préférence sous forme matricielle.

6. Système selon une des revendications précédentes, dans lequel l'antenne (1) comprend au moins un et de préférence plusieurs des capteurs suivants (9, 10, 11) :
- un ou plusieurs capteurs (11) pour mesurer les charges mécaniques sur la structure d'antenne, dans lequel de préférence au moins un capteur (11) est disposé sur et/ou associé à un élément de fixation de l'antenne (1), notamment sur un élément de fixation permettant de fixer l'antenne (1) à un mât ;
- plusieurs capteurs d'accélération (9) qui détectent les six degrés de liberté ;
- au moins un capteur de température (10) pour mesurer la température d'un composant de l'antenne (1), qui s'échauffe pendant le fonctionnement de l'antenne, notamment qui est disposé au niveau d'un composant électronique et/ou d'une soudure et/ou d'un port (3) de l'antenne (1) et/ou d'au moins un capteur de température (10) pour mesurer la température ambiante et/ou de la structure d'antenne ;
- un ou plusieurs capteurs de détection de la puissance d'antenne, dans lequel de préférence, la puissance d'antenne de chaque port (3) de l'antenne est mesurée et/ou enregistrée individuellement et/ou dans lequel de préférence la détection de la puissance d'antenne est de préférence réalisée par au moins un coupleur directionnel et/ou par au moins un capteur de température et/ou dans lequel la détection de la puissance d'antenne est réalisée par enregistrement passif de la puissance requise.

7. Système selon une des revendications précédentes, dans lequel les paquets de données comprennent, outre les données issues des données de mesures, des données d'antenne supplémentaires, dans lequel les données d'antenne supplémentaires comprennent de préférence au moins un identifiant et/ou des données de géolocalisation et/ou des données d'orientation de l'antenne (1) et/ou des données de configuration d'antenne.

8. Système selon une des revendications précédentes, dans lequel l'unité d'acquisition de données (8) acquiert les données de mesure pendant le stockage, le transport et/ou le fonctionnement, dans lequel l'unité d'acquisition de données (8) acquiert de préférence les données de mesure au moins pendant le stockage et/ou le transport, dans lequel l'antenne (1) stocke temporairement les données de mesure de préférence pendant le stockage et/ou le transport et ne transmet les paquets de données générés sur la base de ces données de mesure à la base de données externe (16) qu'après la mise en service.

9. Système selon la revendication 8, dans lequel l'antenne (1) dispose d'une alimentation électrique autonome, notamment d'un dispositif de stockage d'énergie électrique, en particulier une batterie, un condensateur ou un accumulateur, dans lequel l'alimentation électrique autonome constitue de préférence un élément séparé, qui peut être connecté à une borne de l'antenne (1) pour alimenter l'antenne (1) en énergie électrique, dans lequel l'alimentation électrique autonome peut être connectée de préférence à un port (3) de l'antenne (1) et/ou est dans lequel de préférence l'alimentation électrique autonome est intégrée à l'antenne (1) et/ou dans lequel l'unité d'acquisition de données (8) détecte de préférence la présence d'une alimentation électrique autonome connectée et/ou l'absence d'alimentation externe et dans cet état, ne transmet aucune donnée et/ou ne modifie pas les paramètres d'acquisition de données.

10. Système selon une des revendications précédentes, dans lequel l'unité d'évaluation (17) détermine une variation des propriétés mécaniques et/ou un niveau de dommage et/ou une durée de vie restante et/ou des variations de position et d'orientation des antennes (1) et/ou dans lequel il s'agit d'une caractéristique de fatigue.

11. Système selon une des revendications précédentes, dans lequel les paquets de données transmis par les antennes (1) à intervalles prédéterminés sont collectés dans la base de données (16) des antennes (1) respectives et/ou dans lequel les données transmises par une antenne (1) comprennent un spectre (28), qui est de préférence divisé en bandes, dans lequel l'unité d'évaluation (17) additionne de préférence les spectres (28) transmis par l'antenne (1) à différents instants pour générer un spectre total, et/ou dans lequel l'évaluation est basée sur l'intégralité des paquets de données transmis par l'antenne (1)
et/ou
dans lequel la conversion est effectuée par une fonction de transfert et/ou dans lequel les données relatives à une accélération mesurée et/ou à des forces mesurées sont converties en une charge de vent, de préférence en déterminant un profil de charge de vent spécifique au site.

12. Procédé de surveillance d'au moins une antenne (1), notamment d'une antenne de communication mobile, en particulier une antenne de communication mobile d'une station de base de communication mobile, dans lequel l'antenne (1) présente au moins un émetteur de rayonnement (2), une unité d'acquisition de données (8), une mémoire (8') et au moins un ou plusieurs capteurs d'accélération (9) et un ou plusieurs capteurs de température (10), dans lequel l'unité d'acquisition de données (8) acquiert les données de mesure déterminées par un ou plusieurs capteurs d'accélération (9) et un ou plusieurs capteurs de température (10) et les stocke dans la mémoire (8'),
dans lequel l'unité d'acquisition de données (8) génère une pluralité de données de mesure stockées dans la mémoire (8') d'un ou plusieurs paquets de données et les transmet à la base de données centrale (16), dans lequel les paquets de données transmis sont collectés dans la base de données (16) de l'antenne (1) et évalués par une unité d'évaluation (17) pour assurer la surveillance de l'antenne (1), dans lequel l'unité d'acquisition de données (8) effectue une réduction de données des données de mesure,
dans lequel l'unité d'évaluation (17) détermine une variation des propriétés mécaniques et/ou un niveau de dommage et/ou une durée de vie restante de l'antenne, dans lequel l'unité d'évaluation (17) compare au moins une valeur générée sur la base des paquets de données transmis par l'antenne (1) pour chaque antenne (1) avec une courbe caractéristique stockée dans l'unité d'évaluation (17) pour le type d'antenne correspondant,
dans lequel les données générées sur la base des données de mesure d'un ou plusieurs capteurs (9, 10, 11) et transmises par l'antenne (1) sont converties par unité d'évaluation (17) en paramètres, pour lesquels une ou plusieurs courbes caractéristiques sont enregistrées dans l'unité d'évaluation (17).

13. Procédé selon la revendication 12, dans lequel la courbe caractéristique stockée est de préférence une courbe caractéristique de fatigue et/ou dans lequel des mesures préventives de maintenance et/ou de remplacement des antennes (1) sont mises en œuvre sur la base de l'évaluation effectuée par l'unité d'évaluation.

14. Procédé selon une des revendications 12 ou 13, dans lequel l'unité d'acquisition de données (8) transmet les paquets de données à intervalles prédéterminés et/ou à la demande d'une partie externe et/ou dans lequel la réduction des données comprend de préférence une évaluation des données de mesure en fonction des valeurs maximales, des valeurs minimales et/ou des cycles et/ou d'une génération d'un spectre (28), notamment d'un spectre (28) de valeurs maximales, de valeurs minimales et/ou de cycles, dans lequel le spectre (28) est de préférence divisé en bandes.

15. Procédé selon une des revendications 12 à 14 pour la surveillance d'au moins une antenne (1) selon une des revendications 1 à 9 ou utilisant un système selon une des revendications 10 ou 11.
